# EUROPEAN PATENT APPLICATION

(11) **EP 4 822 480 A1**
(43) Date of publication of application: **14.10.2026**
(21) Application number: 24917942.5
(22) Date of filing: 30.05.2024
(51) Int. Cl.: G05F 1/10, G05F 3/02, H02M 3/156

(54) **POWER SUPPLY METHOD, POWER SUPPLY CIRCUIT, AND ELECTRONIC DEVICE**

(30) Priority: 15.01.2024 CN 202410059974
(71) Applicant: Shanghai Awinic Technology Co., Ltd, Shanghai 201199 (CN)
(72) Inventor: ZHANG, Haijun, Shanghai 201199 (CN)
(74) Representative: Kraus & Lederer PartGmbB
(86) International application number: PCT/CN2024/096495
(87) International publication number: WO 2025/152327

(57) **Abstract**

Embodiments of the present disclosure provide a power supply method, a power supply circuit, and an electronic device. The method includes: obtaining a detection output signal based on a detection signal; generating a reference signal based on the detection output signal; and generating an output voltage based on the reference signal, when an amplitude of the detection signal is greater than or equal to a boost threshold; wherein a supply voltage is used to supply power to a power supply. Embodiments of the present disclosure eliminate output signal distortion caused by excessively fast voltage boost and output signal clipping caused by excessively slow voltage boost.

## Description

### CROSS-REFERENCE

This disclosure claims the priority of the Chinese patent application with the application number 202410059974.0 and the title of the invention "POWER SUPPLY METHOD, POWER SUPPLY CIRCUIT AND ELECTRONIC DEVICE" submitted to the China Patent Office on January 15, 2024, the entire contents of which are incorporated by reference in this disclosure.

### TECHNICAL FIELD

Embodiments of the present disclosure relate to the field of power supply technology, in particular to a power supply method, a power supply circuit, and an electronic device.

### BACKGROUND

Portable devices such as smartphones impose increasingly higher requirements on static power consumption and dynamic power consumption, and demand lower static and dynamic power consumption for audio amplifiers and motor drivers. To reduce the power consumption and improve the overall efficiency of audio amplifiers and motor drivers, most existing audio amplifiers and motor drivers are equipped with adaptive power supply technology. This technology adaptively adjusts the output voltage of a power supply circuit to reduce power consumption.

However, the adaptive adjustment of the output voltage of the power supply circuit may cause distortion in an output signal during voltage boosting if the boost speed is too fast, or may lead to signal clipping in the boost process if the speed is too slow.

Therefore, how to adaptively adjust the output voltage of the power supply circuit in a better manner has become an urgent technical problem to be solved.

### SUMMARY

In view of this, one of the technical problems solved by the embodiments of the present disclosure is to provide a power supply method, a power supply circuit and an electronic device, which eliminate output signal distortion caused by excessively fast voltage boost and output signal clipping caused by excessively slow voltage boost.

In a first aspect, embodiments of the present disclosure provide a power supply method. The method includes: obtaining a detection output signal based on a detection signal; generating a reference signal based on the detection output signal; and generating an output voltage based on the reference signal, when an amplitude of the detection signal is greater than or equal to a boost threshold. It may be understood that a supply voltage is used to supply power to a power supply.

In a second aspect, embodiments of the present disclosure provide a power supply circuit. The circuit includes: a detection circuit, including a detection signal input terminal and a detection signal output terminal, wherein the detection signal input terminal is configured to receive a detection signal, and the detection signal output terminal is configured to output a detection output signal; a reference signal generation circuit, including a first input terminal and an output terminal, the first input terminal of the reference signal generation circuit being electrically connected to the detection signal output terminal, wherein the reference signal generation circuit is configured to generate a reference signal based on the detection output signal; and a power supply, including a first input terminal, a second input terminal and an output terminal, the first input terminal of the power supply being electrically connected to the output terminal of the reference signal generation circuit, and the second input terminal of the power supply being configured to receive a supply voltage, wherein, when an amplitude of the detection signal is greater than or equal to a boost threshold, the power supply is configured to generate an output voltage based on the reference signal.

In a second aspect, embodiments of the present disclosure provide an electronic device, including the power supply circuit described in the second aspect and an amplifier connected to the power supply circuit, wherein the power supply circuit is configured to supply power to the amplifier using the output voltage.

Embodiments of the present disclosure obtain a detection output signal based on a detection signal, when the amplitude of the detection signal is greater than or equal to a boost threshold, generate a reference signal based on the detection output signal, and generate an output voltage based on the reference signal. Therefore, embodiments of the present disclosure are capable of performing voltage boost when the amplitude of the detection signal is greater than or equal to the boost threshold, thereby reducing power consumption. Embodiments of the present disclosure can eliminate output signal distortion caused by excessively fast voltage boost and output signal clipping caused by excessively slow voltage boost.

### BRIEF DESCRIPTION OF DRAWINGS

Hereinafter, some specific embodiments of the embodiments of the present disclosure will be described in detail with reference to the accompanying drawings in an exemplary and non-limiting manner. The same reference numerals in the accompanying drawings indicate the same or similar components or parts. Those skilled in the art would understand that these accompanying drawings are not necessarily drawn to scale. In the accompanying drawings:
FIG.1 is a schematic waveform diagram of output signals under different supply voltages;
FIG.2 is a flowchart of a power supply method according to an embodiment of the present disclosure;
FIG.3A is a circuit structure diagram of a power supply circuit and an amplifier according to an embodiment of the present disclosure;
FIG.3B is a circuit structure diagram of another power supply circuit and an amplifier according to an embodiment of the present disclosure;
FIG.3C is a circuit structure diagram of still another power supply circuit and an amplifier according to an embodiment of the present disclosure;
FIG.4 is a flowchart of step S2 of a power supply method according to an embodiment of the present disclosure;
FIG.5 is a flowchart of another power supply method according to an embodiment of the present disclosure;
FIG.6 is a schematic diagram of still another power supply circuit according to an embodiment of the present disclosure;
FIG.7 is a circuit structure diagram of a margin generation circuit in a power supply circuit according to an embodiment of the present disclosure;
FIG.8 is a schematic waveform diagram of output voltage and detection signal of a power supply circuit according to an embodiment of the present disclosure; and
FIG.9 is a circuit structure diagram of one implementation of a power supply in a power supply circuit according to an embodiment of the present disclosure.

### DETAILED DESCRIPTION

In order to enable those in this art to better understand the technical solutions in embodiments of the present disclosure, the technical solutions in the embodiments of the present disclosure will be described clearly and completely in the following in conjunction with the accompanying drawings in the embodiments of the present disclosure. It is obvious that the described embodiments are only some of the embodiments in the embodiments of the present disclosure, but not all of the embodiments. Based on the embodiments of the present disclosure, all other embodiments obtained by those of ordinary skill in the art shall fall within the scope of protection of the embodiments of the present disclosure.

Reference is made to the accompanying drawings in the following detailed description, which constitute a part thereof and illustrate exemplary embodiments. In addition, it should be understood that other embodiments may be adopted, and structural and/or logical changes may be made without departing from the scope of the claimed subject matter. It should also be noted that directional references such as upper, lower, top and bottom may be merely used to facilitate the description of features in the drawings. Therefore, the following detailed description shall not be construed in a limiting sense, and the scope of the claimed subject matter is defined only by the appended claims and equivalents thereof.

Numerous details are set forth in the following description. Nevertheless, it will be apparent to those skilled in the art that the embodiments herein may be practiced without these specific details. In some instances, well-known methods and apparatuses are shown in block diagram form rather than in detail to avoid obscuring the embodiments herein. References throughout this specification to "an embodiment", "one embodiment" or "some embodiments" mean that a particular feature, structure, function or characteristic described in connection with the embodiment is included in at least one embodiment herein. Accordingly, the phrases "in an embodiment", "in one embodiment" or "some embodiments" appearing in various places throughout the specification do not necessarily refer to the same embodiment. Furthermore, particular features, structures, functions or characteristics may be combined in any suitable manner in one or more embodiments. For example, a first embodiment may be combined with a second embodiment under any circumstances where their associated specific features, structures, functions or characteristics are not mutually exclusive.

As used in the description and claims, the singular forms "a", "an" and "the" are intended to include plural forms as well, unless the context clearly indicates otherwise. It should also be understood that the term "and/or" as used herein refers to and encompasses any and all possible combinations of one or more of the associated listed items.

The terms "coupled" and "connected", along with derivatives thereof, may be used herein to describe functional or structural relationships between components. It should be understood that these terms are not intended to be synonymous with each other. Instead, in specific embodiments, "connected" may indicate that two or more elements are in direct physical, optical or electrical contact with each other. "Coupled" may indicate that two or more elements are in direct or indirect physical or electrical contact with each other (with other intermediate elements arranged therebetween), and/or that two or more elements cooperate or interact with each other (for example, in a causal relationship).

The terms "above", "below", "between" and "on" as used herein refer to relative positions of one component or material with respect to other components or materials where such physical relationships are concerned. For example, in the context of materials, a material disposed above or below another material may be in direct contact or have one or more intermediate materials therebetween. Moreover, a material disposed between two materials may be in direct contact with both layers or be provided with one or more intermediate layers. In contrast, a second material, or a first material "on" the second material, or the material is in direct contact with the second material. Similar distinctions apply in the context of component assembly.

As used throughout this description and the claims, a list of items linked by the term "at least one of" or "one or more of" may mean any combination of the listed items. For example, the phrase "at least one of A, B or C" may mean A; B; C; A and B; A and C; B and C; or A, B and C.

The term "circuit" or "module" may refer to one or more passive and/or active components arranged to cooperate with one another to achieve desired functions. The term "signal" may refer to at least one current signal, voltage signal or magnetic signal. The terms "substantially", "near", "approximate", "close to" and "about" generally refer to within ±10% of a target value.

Terms used in the present disclosure are defined as follows:
VBAT: Supply voltage of power supply, i.e., VBAT is used to supply power to the power supply;
Vsig, Isig: Detection output signal;
VREF, IREF: Reference signal;
Ctrl-ADP: Control signal;
PVDD: Output voltage;
Vth: Boost threshold;
VOP1, VON1: Output signal of each stage circuit of amplifier;
y1: Detection signal;
y2, y3: Output signal;
A: Peak value of detection signal;
Tsin: Period of detection signal;
trise: Time required for power supply boosting;
HR: Margin between detection signal and output voltage;
Vdv, Idv: Margin signal.

The amplifier includes an audio power amplifier or a motor driver, both of which require a power supply circuit to provide an output voltage.

The following description uses audio equipment as an example.

To reduce power consumption during music playback and improve the overall efficiency of audio power amplifiers, most existing audio power amplifiers are equipped with power supply circuits capable of adjusting output voltage. Such power supply circuits operate in a direct mode or a boost mode based on the amplitude of input signals, namely music signals.

In particular, when the input signal is weak and fails to reach a boost threshold, the power supply circuit operates in the direct mode, and the output voltage is set to be equal to the supply voltage of the power supply. When the input signal increases to reach or exceed the boost threshold, the power supply circuit switches rapidly from the direct mode to the boost mode and boosts voltage to a preset value to supply higher output power for the audio power amplifier. When the input signal decreases, the power supply circuit switches back from the boost mode to the direct mode so as to lower the power consumption of the audio power amplifier.

A common boost power supply circuit includes: generating a power detection flag signal based on the power magnitude of an audio input signal; determining whether voltage boost is required based on the power detection flag signal; if voltage boost is required, generating a boost control signal and setting a boost threshold setting signal based on the magnitude of the power detection flag signal; and activating a boost mode based on the boost control signal, outputting boosted voltage to supply power to a power output stage circuit, and controlling a boost value based on the boost threshold setting signal.

In addition, another common audio adaptive boost circuit includes: detecting and judging a voltage gear of the power supply to generate a corresponding supply voltage gear signal; detecting a voltage amplitude of an audio input signal and generating an audio amplitude level signal based on the voltage amplitude of the audio signal; selecting the corresponding voltage gear based on the supply voltage gear signal, and selecting a boost control signal of a corresponding voltage level in the selected voltage gear based on the audio amplitude level signal; and performing voltage boost based on the boost control signal.

As described in the above solutions, adjustable boost power supply circuits are commonly adopted to meet the power demand of output signals. When the input signal is a small signal, a low supply voltage may provide sufficient drive capability. As the input signal increases, the boost power supply circuit boosts the low supply voltage to the required level for continuous power supply.

As described above, the power supply circuits set one or more boost thresholds to determine a boost amplitude based on the magnitude of the detected input signal. A single boost threshold leads to excessively fast or slow voltage boost, whereas multiple boost thresholds (for example, N thresholds, where N is a positive integer greater than 1) require at least 2N comparators and corresponding auxiliary circuits, which consumes chip area in the audio power amplifier, increases power consumption thereof, and prevents the audio power amplifier from achieving optimal efficiency.

In addition, in the power supply circuits, excessively fast voltage boost causes signal distortion at the boost position of the output signal, while excessively slow voltage boost leads to output signal clipping in the boost process, resulting in audible noise in the music and impairing both sound quality and listening experience.

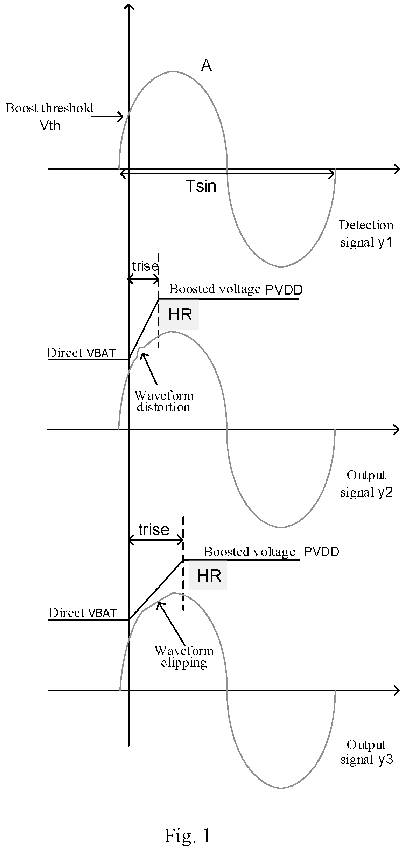

Referring to FIG.1, the boost threshold corresponds to the intersection point between detection signal y1 and the vertical coordinate axis, wherein A is a peak value of the detection signal, Tsin is a period of the detection signal, trise is the time required for the power supply to boost the voltage to PVDD, PVDD is the output voltage of the power supply, namely the output voltage of the power supply circuit, and HR is a margin between the detection signal and the output voltage. Excessively fast voltage boost of the power supply circuit causes distortion in an output signal waveform, i.e., the protrusion indicated by the arrow of waveform y2 is the waveform distortion. Excessively slow voltage boost fails to boost the output voltage to the required level in time, leading to clipping of the output signal waveform, i.e., the portion indicated by the arrow of waveform y3 is clipped.

In order to solve the above problems, embodiments of the present disclosure obtain a detection output signal based on a detection signal, generate a reference signal based on the detection output signal; when an amplitude of the detection signal is greater than or equal to a boost threshold, generate an output voltage based on the reference signal, wherein the supply voltage is used to supply power to the power supply. Therefore, embodiments of the present disclosure are capable of performing voltage boost when the amplitude of the detection signal is greater than or equal to the boost threshold, thereby reducing power consumption. Embodiments of the present disclosure can eliminate output signal distortion caused by excessively fast voltage boost and output signal clipping caused by excessively slow voltage boost.

Specific implementation of embodiments of the present disclosure is further described below in conjunction with the accompanying drawings.

Embodiments of the present disclosure provide a power supply method, applied to a power supply circuit.

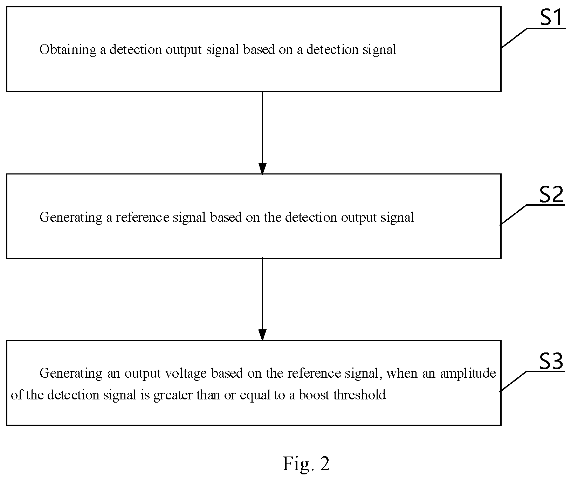

Referring to FIG. 2, the method includes:
Step S1: obtaining a detection output signal based on a detection signal.

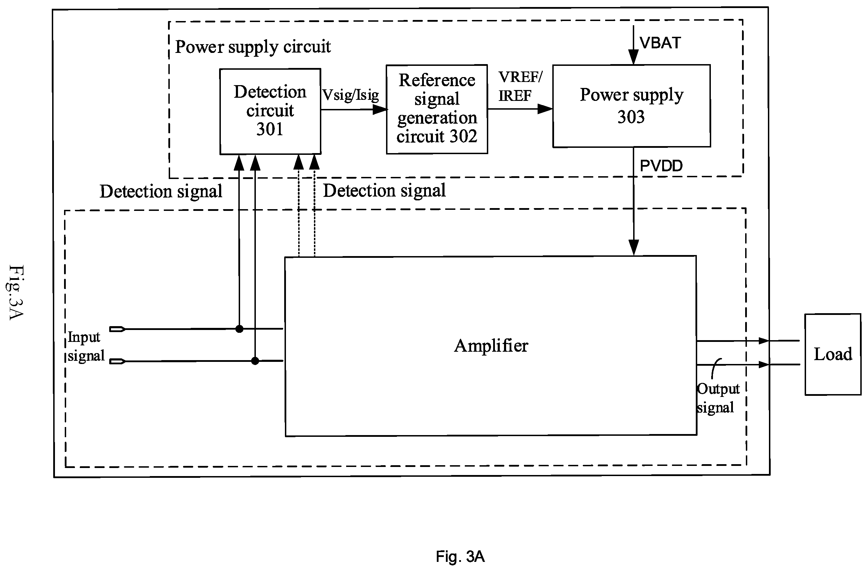

In some specific implementations of embodiments of the present disclosure, referring to FIG.3A, the detection signal is obtained from an amplifier or an input signal of the amplifier. In the context, the detection signal is obtained from the amplifier, when the amplifier is provided with multiple circuit modules, the detection signal may be an output signal of each stage circuit in the amplifier. The amplifier includes an audio power amplifier or a motor driver.

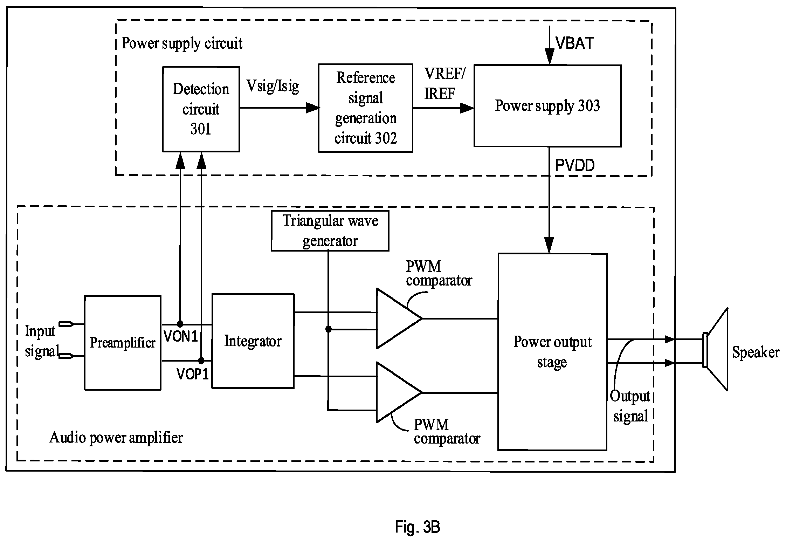

If the amplifier is an audio power amplifier, the audio power amplifier may include a preamplifier, an integrator, a PWM comparator, a waveform generator such as a triangular wave generator, a power output stage and the like. The detection signal may be any one of the input signal of the audio power amplifier, the output signal of the preamplifier in the audio power amplifier, the output signal of the integrator, the output signal of the PWM comparator, or the output signal of the power output stage circuit. For example, referring to FIG.3B, the detection signal is the output signal of the preamplifier in the audio power amplifier.

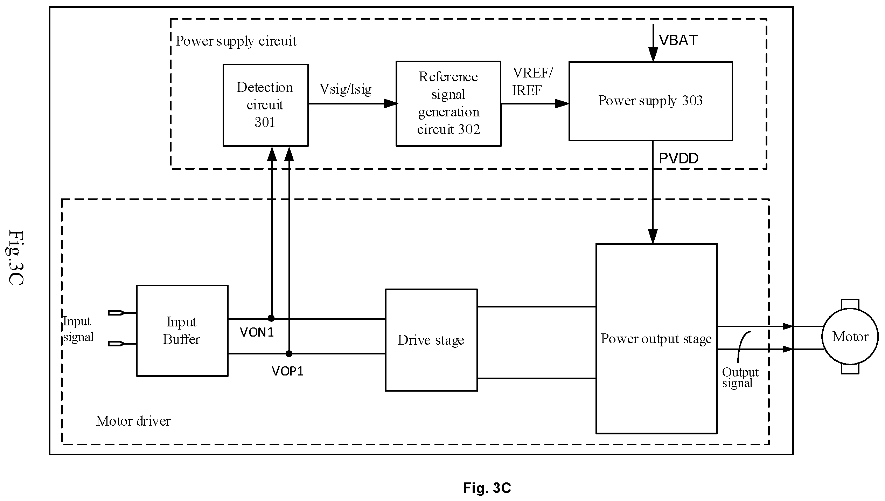

If the amplifier is a motor driver, the motor driver may include an input Buffer, a drive stage, a power output stage and the like. The detection signal may be any one of the input signal of the motor driver, the output signal of the input Buffer of the motor driver, the output signal of the drive stage, or the output signal of the power output stage. For example, referring to FIG.3C, the detection signal is the output signal of the input Buffer of the motor driver.

The circuit design in embodiments of the present disclosure is more flexible, allowing the detection signal to be obtained based on the input signal of the audio power amplifier or the motor driver, or based on the output signal of each stage circuit of the audio power amplifier or the motor driver.

In particular, when an amplitude of the detection signal is greater than or equal to a boost threshold, the power supply circuit enters a boost mode and boost voltage to a preset voltage value to supply higher output power for the audio power amplifier.

When the power supply circuit operates in the boost mode, the detection output signal is obtained based on the detection signal, and the amplitude of the detection output signal is synchronized with the amplitude of the detection signal.

Step S2: generating a reference signal based on the detection output signal.

In embodiments of the present disclosure, the reference signal associated with the detection output signal is generated based on the detection output signal.

In particular, the amplitude of the reference signal is synchronized with the amplitude of the detection output signal. The amplitude synchronization includes: if the amplitude of the detection output signal increases, the amplitude of the reference signal also increases; or if the amplitude of the detection output signal decreases, the amplitude of the reference signal also decreases.

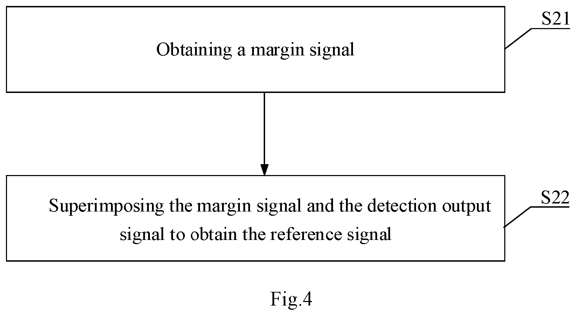

In some specific implementations of embodiments of the present disclosure, referring to FIG.4, the step S2 includes:
Step S21: obtaining a margin signal.
Step S22: superimposing the margin signal and the detection output signal to obtain the reference signal.

To facilitate the superposition of the margin signal and the detection output signal, the margin signal is of the same signal type as the detection output signal. In embodiments of the present disclosure, if the detection output signal is a current signal, the margin signal is also a current signal; if the detection output signal is a voltage signal, the margin signal is also a voltage signal. That is, both the detection output signal and the margin signal are voltage signals, or both are current signals. Alternatively, if the detection output signal is a voltage signal and the margin signal is a current signal, the margin signal may be converted into a voltage signal first and then superimposed with the detection output signal. Alternatively, if the detection output signal is a current signal and the margin signal is a voltage signal, the detection output signal may be converted into a voltage signal first and then superimposed with the margin signal. Alternatively, if the detection output signal is a voltage signal and the margin signal is a current signal, the detection output signal may be converted into a current signal first and then superimposed with the margin signal. Alternatively, if the detection output signal is a current signal and the margin signal is a voltage signal, the margin signal may be converted into a current signal first and then superimposed with the detection output signal.

In embodiments of the present disclosure, superposition of the margin signal and the detection output signal may be realized by adding the margin signal to the detection output signal, namely adding the margin value to the amplitude of the detection output signal. In embodiments of the present disclosure, the amplitude of the margin signal may also be multiplied by a coefficient and then added to the detection output signal to realize the superposition of the margin signal and the detection output signal, thereby obtaining the reference signal.

The reference signal may be a reference current signal IREF or a reference voltage signal VREF. If the reference signal is the current signal IREF, current-to-voltage conversion may be performed in the power supply to convert the current signal IREF into the voltage signal VREF.

In embodiments of the present disclosure, the reference signal is obtained by superimposing the margin signal and the detection output signal, which enables simpler realization of amplitude synchronization of the reference signal and the detection output signal.

In particular, the margin signal may be a signal with a fixed amplitude.

In embodiments of the present disclosure, adopting the margin signal having a fixed amplitude can more accurately ensure the amplitude synchronization of the reference signal and the detection output signal.

Step S3: generating an output voltage based on the reference signal, when an amplitude of the detection signal is greater than or equal to a boost threshold.

Here, the supply voltage is used to supply power to the power supply. In particular, generating an output voltage based on the reference signal includes: Output Voltage=k×Reference Voltage, where k is a preset amplification coefficient of the power supply circuit, and the reference voltage is a voltage amplitude of the reference signal. It may be understood that the preset amplification coefficient k is a preset parameter of a chip circuit and may be set according to actual requirements. The reference signal includes either a reference voltage signal or a reference current signal. When the reference signal is a reference voltage signal, the amplitude of the reference voltage signal, namely the reference voltage may be directly used to acquire the output voltage. When the reference signal is a reference current signal, the reference current signal may first be converted into a reference voltage signal, then the amplitude of the converted reference voltage signal, namely the reference voltage may be used to acquire the output voltage.

Embodiments of the present disclosure are capable of generating the output voltage based on the reference signal and performing voltage boost, when the amplitude of the detection signal is greater than or equal to the boost threshold, thereby reducing power consumption. Embodiments of the present disclosure can eliminate output signal distortion caused by excessively fast voltage boost and output signal clipping caused by excessively slow voltage boost.

In some specific implementations of embodiments of the present disclosure, a boost amplitude of the output voltage is synchronized with the amplitude of the detection signal.

In embodiments of the present disclosure, the boost amplitude of the output voltage is synchronized with the amplitude of the detection signal, thereby further eliminating output signal distortion caused by excessively fast voltage boost and output signal clipping caused by excessively slow voltage boost.

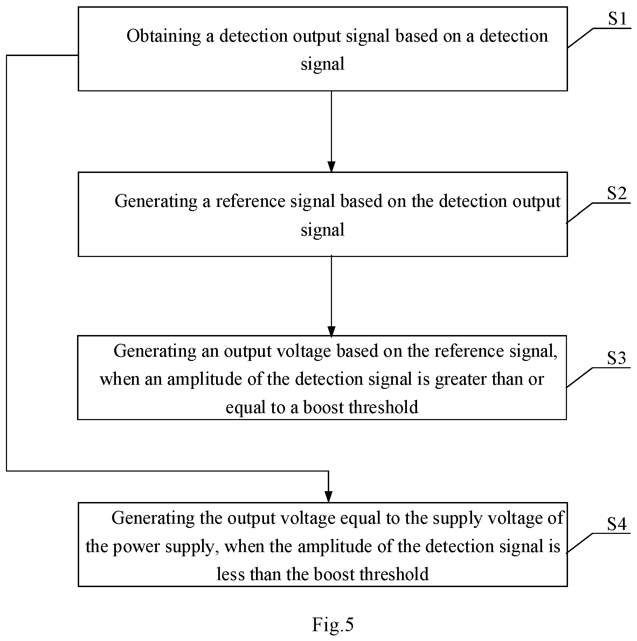

In some specific implementations of embodiments of the present disclosure, referring to FIG.5, the method further includes:
Step S4: setting the output voltage to be the supply voltage of the power supply, when the amplitude of the detection signal is less than the boost threshold.

In particular, when the detection signal is weak and fails to reach the boost threshold, the power supply circuit operates in a direct mode, and the output voltage is the supply voltage of the power supply.

Corresponding to the above method, the present disclosure further provides a power supply circuit. Referring to FIG.3A, the power supply circuit includes:
a detection circuit 301, including a detection signal input terminal and a detection signal output terminal, wherein the detection signal input terminal is configured to receive a detection signal, and the detection signal output terminal is configured to output a detection output signal. The detection output signal is a detection output voltage signal Vsig or a detection output current signal Isig.
a reference signal generation circuit 302, including a first input terminal and an output terminal, the first input terminal of the reference signal generation circuit 302 being electrically connected to the detection signal output terminal, wherein the reference signal generation circuit 302 is configured to generate a reference signal based on the detection output signal. The reference signal is a reference voltage signal VREF or a reference current signal IREF.
a power supply 303, including a first input terminal, a second input terminal and an output terminal, the first input terminal of the power supply 303 being electrically connected to the output terminal of the reference signal generation circuit 302, the second input terminal of the power supply 303 being configured to receivea supply voltage VBAT, and the supply voltage VBAT being used to supply power to the power supply 303. wherein, when an amplitude of the detection signal is greater than or equal to a boost threshold, the power supply 303 is configured to generate an output voltage based on the reference signal. It may be understood that when the reference signal is the reference current signal IREF, the power supply 303 may first convert the signal IREF into the voltage signal VREF, and then generate the output voltage based on the reference signal. In particular, generating an output voltage based on the reference signal includes: Output Voltage=k×Reference Voltage, where k is a preset amplification coefficient, and the reference voltage is a voltage amplitude of the reference signal. It may be understood that the preset amplification coefficient k is a preset parameter of a chip circuit and may be set according to actual requirements. The reference signal includes either a reference voltage signal or a reference current signal. When the reference signal is a reference voltage signal, the amplitude of the reference voltage signal, namely the reference voltage may be directly used to acquire the output voltage. When the reference signal is a reference current signal, the reference current signal may first be converted into a reference voltage signal, then the amplitude of the converted reference voltage signal, namely the reference voltage may be used to acquire the output voltage. The conversion from the reference current signal to the reference voltage signal may be performed either in the reference signal generation circuit 302 or in the power supply 303.

Embodiments of the present disclosure are capable of generating the output voltage based on the reference signal and performing voltage boost, when the amplitude of the detection signal is greater than or equal to the boost threshold, thereby reducing power consumption. Embodiments of the present disclosure can eliminate output signal distortion caused by excessively fast voltage boost and output signal clipping caused by excessively slow voltage boost.

In some specific implementations of embodiments of the present disclosure, referring to FIG.3A, the detection signal is obtained from an amplifier or an input signal of the amplifier. An input terminal of the amplifier is configured to receive the input signal, and an output terminal of the amplifier outputs the output signal to drive loads, such as a speaker or a motor. The amplifier includes an audio power amplifier or a motor driver.

If the amplifier is an audio power amplifier, the audio power amplifier may include a preamplifier, an integrator, a PWM comparator, a waveform generator such as a triangular wave generator, a power output stage circuit and the like. The input terminal of the preamplifier is used to receive the input signal; the input terminal of the integrator is connected to the output terminal of the preamplifier; the first input terminal of the PWM comparator is connected to the output terminal of the integrator; the second input terminal of the PWM comparator is connected to the waveform generator; the input terminal of the power output stage is connected to the output terminal of the PWM comparator; and the output terminal of the power output stage is used to output the output signal, which can drive loads, such as the speaker shown in Figure 3B or the motor shown in Figure 3C. The detection signal may be any one of the input signal of the audio power amplifier, the output signal of the preamplifier in the audio power amplifier, the output signal of the integrator, the output signal of the PWM comparator, or the output signal of the power output stage circuit. For example, referring to FIG.3B, the detection signal is the output signals VON1 and VOP1 of the preamplifier in the audio power amplifier.

If the amplifier is a motor driver, the motor driver may include an input Buffer, a drive stage, a power output stage and the like. The detection signal may be any one of the input signal of the motor driver, the output signal of the input Buffer of the motor driver, the output signal of the drive stage, or the output signal of the power output stage. For example, referring to FIG.3C, the detection signal is the output signals VON1 and VOP1 of the input Buffer of the motor driver.

The circuit design in embodiments of the present disclosure is more flexible, allowing the detection signal to be obtained based on the input signal of the audio power amplifier or the motor driver, or based on the output signal of each stage circuit of the audio power amplifier or the motor driver.

In particular, when the detection circuit 301 determines that the amplitude of the detection signal is greater than or equal to the boost threshold, the power supply circuit enters a boost mode and boost voltage to a preset voltage value to supply higher output power for the audio power amplifier or the motor driver.

The detection circuit 301 obtains the detection output signal based on the detection signal, and the amplitude of the detection output signal is synchronized with the amplitude of the detection signal.

In particular, the detection output signal may be a current signal Isig or a voltage signal Vsig.

In embodiments of the present disclosure, the reference signal generation circuit 302 generates a reference signal VREF/IREF associated with the detection output signal based on the detection output signal Vsig/Isig.

In particular, the amplitude of the reference signal is synchronized with the amplitude of the detection output signal. The amplitude synchronization includes: if the amplitude of the detection output signal increases, the amplitude of the reference signal also increases; or if the amplitude of the detection output signal decreases, the amplitude of the reference signal also decreases.

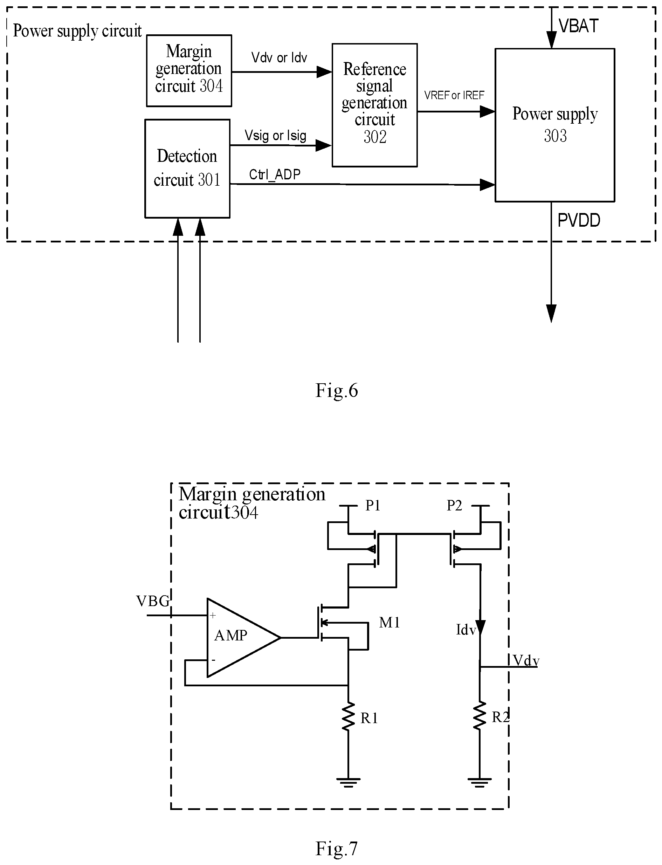

In some specific implementations of embodiments of the present disclosure, referring to FIG.6, the power supply circuit includes:
a margin generation circuit 304, configured to generate a margin signal.

The reference signal generation circuit 302 is specifically configured to superimpose the margin signal and the detection output signal Vsig/Isig to obtain the reference signal VREF/IREF. The margin signal may be a voltage signal Vdv or a current signal Idv.

To facilitate the superposition of the margin signal and the detection output signal, the margin signal is of the same signal type as the detection output signal. In embodiments of the present disclosure, if the detection output signal is a current signal Isig, the margin signal is also a current signal Idv; if the detection output signal is a voltage signal Vsig, the margin signal is also a voltage signal Vdv. That is, both the detection output signal and the margin signal are voltage signals, or both are current signals. Alternatively, if the detection output signal is a voltage signal Vsig and the margin signal is a current signal Idv, the margin signal Idv may be converted into a voltage signal first and then superimposed with the detection output signal. Alternatively, if the detection output signal is a current signal Isig and the margin signal is a voltage signal Vdv, the detection output signal Isig may be converted into a voltage signal first and then superimposed with the margin signal. Alternatively, if the detection output signal is a voltage signal Vsig and the margin signal is a current signal Idv, the detection output signal Vsig may be converted into a current signal first and then superimposed with the margin signal Idv. Alternatively, if the detection output signal is a current signal Isig and the margin signal is a voltage signal Vdv, the margin signal Vdv may be converted into a current signal first and then superimposed with the detection output signal Isig. The aforementioned current-to-voltage conversion process may be performed within the reference signal generation circuit 302.

In embodiments of the present disclosure, superposition of the margin signal and the detection output signal may be realized by adding the margin signal to the detection output signal, namely adding the margin value to the amplitude of the detection output signal. In embodiments of the present disclosure, the amplitude of the margin signal may also be multiplied by a coefficient and then added to the detection output signal to realize the superposition of the margin signal and the detection output signal, thereby obtaining the reference signal. The reference signal may be a reference current signal IREF or a reference voltage signal VREF. If the reference signal is the current signal IREF, current-to-voltage conversion may be performed in the power supply 303 to convert the current signal IREF into the voltage signal VREF.

In particular, the margin generation circuit 304 may generate either the voltage signal Vdv or the current signal Idv. Referring to FIG. 7, is a schematic circuit diagram taking the voltage signal generated by the margin generation circuit 304 as an example. VBG is a bandgap reference voltage, and the margin generation circuit 304 generates the margin voltage signal Vdv based on the bandgap reference voltage VBG. If the margin generation circuit 304 generates a current signal, the margin current signal Idv is generated.

In embodiments of the present disclosure, the reference signal is obtained by superimposing the margin signal and the detection output signal, which enables simpler realization of amplitude synchronization of the reference signal and the detection output signal.

In particular, the margin signal has a fixed amplitude.

In embodiments of the present disclosure, adopting the margin signal having a fixed amplitude can more accurately ensure the amplitude synchronization of the reference signal and the detection output signal.

In some specific implementations of embodiments of the present disclosure, a boost amplitude of the output voltage is synchronized with the amplitude of the detection signal.

In embodiments of the present disclosure, the boost amplitude of the output voltage is synchronized with the amplitude of the detection signal, thereby further eliminating output signal distortion caused by excessively fast voltage boost and output signal clipping caused by excessively slow voltage boost.

In some specific implementations of embodiments of the present disclosure, the power supply 303 is further configured to:
set the output voltage equal to the supply voltage of the power supply, when the amplitude of the detection signal is less than the boost threshold.

In particular, referring to FIG. 6, the detection circuit 301 may transmit a control signal Ctrl-ADP to the power supply 303. When the amplitude of the detection signal is greater than or equal to the boost threshold, the power supply 303 may be controlled to operate in the boost mode. When the amplitude of the detection signal is less than the boost threshold, the power supply 303 may be controlled to operate in the direct mode.

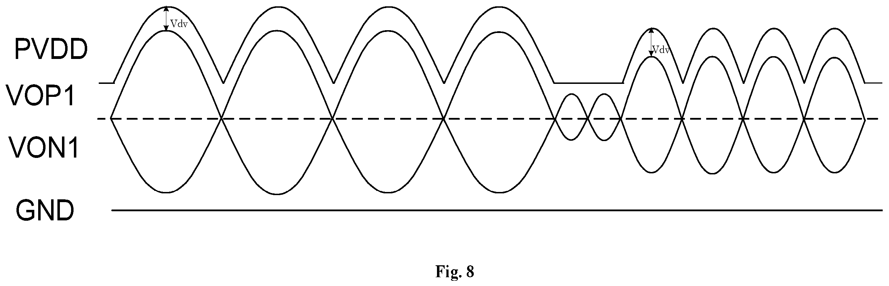

Referring to FIG. 8, the implementation of embodiments of the present disclosure is described in detail through a specific implementation. Only voltage signals are taken as examples in this figure, and current signals are also applicable. If the output signals VOP1 and VON1 of the preamplifier serve as the detection signals, the power supply circuit operates in the boost mode when the detection signals are greater than or equal to the boost threshold. The output voltage PVDD is generated based on the reference signal VREF, so that a fixed margin Vdv is maintained between the output voltage PVDD and the output signals VOP1 and VON1 of the preamplifier, ensuring amplitude synchronization of the output voltage PVDD and the detection signals VOP1 and VON1.

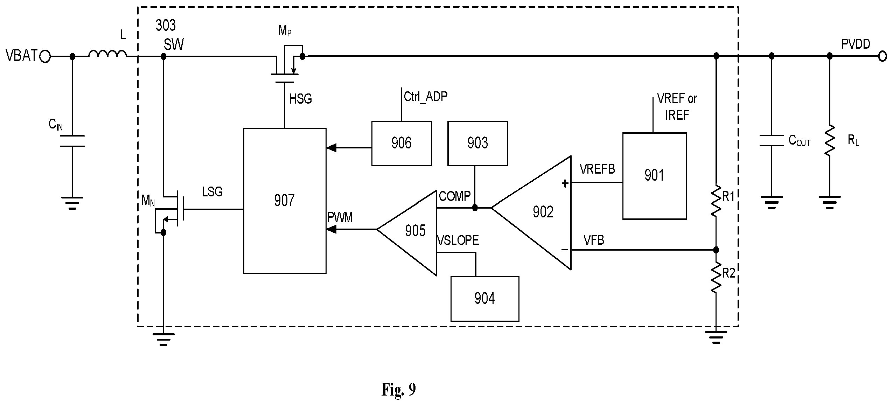

Referring to FIG. 9, the implementation of the power supply 303 in embodiments of the present disclosure is described in detail through a specific implementation. The power supply 303 generates the output voltage PVDD based on the reference signal VREFVBAT.

FIG. 9 shows a typical structure of a DC-DC BOOST power supply, which includes voltage divider resistors R1 and R2, a reference benchmark signal generation circuit 901, an error amplifier 902, a compensation circuit 903, a slope voltage generation circuit 904, a PWM comparator 905, a control circuit 906, a power drive circuit 907, a lower power transistor MN and an upper power transistor MP. The control circuit 906 may control the DC-DC BOOST power supply to operate in the direct mode or the boost mode. When a control signal of the control circuit 906 places the DC-DC BOOST power supply in the direct mode, the lower power transistor MN turns off and the upper power transistor MP keeps conducting continuously. The supply voltage VBAT of the power supply passes through inductor L and the upper power transistor MP to generate the output voltage PVDD, in this regard, the output voltage PVDD is set to be equal to the supply voltage VBAT of the power supply. When the control signal Ctrl-ADP received by the control circuit 906 places the DC-DC BOOST power supply (power supply 303) in the boost mode, the output voltage PVDD passes through the voltage divider resistors R1 and R2 to generate a feedback voltage VFB. The reference benchmark signal generation circuit 901 generates a reference benchmark voltage VREFB based on the reference signal VREF transmitted by the reference signal generation circuit 302 (Voltage is taken as an example herein, and current IREF is also applicable). The reference benchmark voltage VREFB is input to the positive input terminal of the error amplifier 902, and the feedback voltage VFB is input to the negative input terminal of the error amplifier 902. The error amplifier 902 amplifies an error between the feedback voltage VFB and the reference benchmark voltage VREFB to generate a COMP voltage. The compensation circuit 903 maintains stable operation of the DC-DC BOOST power supply. The PWM comparator 905 compares the COMP voltage with a VSLOPE voltage output by the slope voltage generation circuit 904 to generate a PWM control signal. The power drive circuit 907 controls the lower power transistor MN and the upper power transistor MP, so that the output voltage PVDD =VBAT/(1-D), where D is the duty cycle of a PWM signal.

In addition, it should be noted that the lower power transistor MN is an NMOS switching transistor, which connects a switch SW to GND. The upper power transistor MP connects the switch SW to the output voltage PVDD. The upper power transistor MP may be a PMOS transistor or an NMOS transistor.

The adaptive power supply 303 according to embodiments of the present disclosure is not limited to a DC-DC BOOST power supply, and may also be a voltage-doubling charge pump power supply.

Referring to FIG. 3A, the present disclosure further provides an electronic device. The electronic device includes the above power supply circuit and an amplifier connected to the power supply circuit. The power supply circuit supplies power to the amplifier with an output voltage.

In particular, the amplifier includes an audio power amplifier or a motor driver.

In embodiments of the present disclosure, the amplifier includes an audio power amplifier. Referring to FIG. 3B, the audio power amplifier is included, and the power supply circuit supplies power to a power output stage circuit of the audio power amplifier with the output voltage.

In embodiments of the present disclosure, the amplifier includes a motor driver. Referring to FIG. 3C, the motor driver is included, and the power supply circuit supplies power to the motor driver with the output voltage.

So far, specific embodiments of the present subject matter have been described. Other embodiments fall within the scope of the appended claims. In some cases, the actions recited in the claims may be performed in different sequences and still achieve desired results. In addition, the processes depicted in the accompanying drawings do not necessarily require the specific sequence or sequential order shown to achieve the desired results. In some embodiments, multitasking and parallel processing may be advantageous.

In the 1990s, it was possible to clearly distinguish between hardware improvements (such as improvements to circuit structures like diodes, transistors, and switches) and software improvements (such as improvements to method procedures) made to a technology. However, with the advancement of technology, numerous improvements to current method procedures may be regarded as direct improvements to hardware circuit structures. Designers almost always obtain the corresponding hardware circuit structures by programming improved method procedures into the hardware circuits. Therefore, it cannot be concluded that improvements to a method procedure are incapable of being implemented by hardware physical modules. For example, a Programmable Logic Device (PLD) such as a Field Programmable Gate Array (FPGA) is such an integrated circuit whose logic functions are determined through user programming. Designers can independently program and integrate a digital system into a single PLD, without requiring chip manufacturers to design and fabricate dedicated integrated circuit chips. Furthermore, such programming is mostly realized by logic compiler software instead of manual integrated circuit chip production at present. This type of software is similar to the software compiler adopted in program development and writing, and the original codes before compilation need to be written in specific programming languages, namely Hardware Description Language (HDL). There are various types of HDL, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), and the like. Currently, the most widely used are VHDL (Very-High-Speed Integrated Circuit Hardware Description Language) and Verilog. Those skilled in the art should clearly understand that hardware circuits for implementing the logical method procedures may be easily obtained by conducting simple logical programming of the method procedures with the above-mentioned hardware description languages and programming them into integrated circuits.

A controller may be implemented in any appropriate manner. For example, the controller may take the form of a microprocessor or processor together with a computer-readable medium storing computer-readable program codes (e.g., software or firmware) executable by the microprocessor or processor, logic gates, switches, Application Specific Integrated Circuits (ASICs), programmable logic controllers and embedded microcontrollers. Examples of the controller include but are not limited to ARC 625D, Atmel AT91SAM, Microchip PIC18F26K20 and Silicone Labs C8051F320. A memory controller may also be implemented as part of control logic inside a memory. Those skilled in the art also recognize that apart from implementing the controller purely through computer-readable program codes, identical functions may be realized by logically programming method steps to configure the controller into forms such as logic gates, switches, ASICs, programmable logic controllers and embedded microcontrollers. Accordingly, such controller may be regarded as a hardware component, and functional apparatuses arranged therein may be deemed internal structures of the hardware component. Furthermore, apparatuses for implementing various functions may be deemed either as software modules for executing corresponding methods or internal structures of the hardware component.

The systems, apparatuses, modules and units illustrated in the foregoing embodiments may be specifically implemented by computer chips, physical entities or functional products. A typical implementation device is a computer, including but not limited to personal computers, laptop computers, cellular phones, camera phones, smart phones, personal digital assistants, media players, navigation devices, email terminals, game consoles, tablet computers, wearable devices and any combination thereof.

For the sake of clarity, the foregoing apparatuses are divided into various functional units for separate elaboration. Of course, in actual implementation of the present disclosure, functions of each unit may be implemented into one or more pieces of software and/or hardware.

Those skilled in the art should understand that the embodiments of the present disclosure may be provided in the form of methods, systems or computer program products. Therefore, the present disclosure may adopt a full hardware embodiment form, a full software embodiment form or an embodiment form combining software and hardware. In addition, the present disclosure may take the form of a computer program product deployed on one or more computer-usable storage mediums containing computer-usable program codes, including but not limited to disk storage devices, CD-ROMs and optical storage devices.

The present disclosure is described with reference to flowcharts and/or block diagrams of methods, devices (systems) and computer program products according to the embodiments thereof. It should be understood that each process and/or block in the flowcharts and block diagrams, as well as combinations thereof, may be realized by computer program instructions. These computer program instructions may be delivered to processors of general-purpose computers, dedicated computers, embedded processors or other programmable data processing devices to construct a machine, in which instructions executed by the processors in the computers or other programmable data processing devices generate an apparatus for implementing the functions specified in one or more processes in the flowcharts and/or one or more blocks in the block diagrams.

These computer program instructions may also be stored in computer-readable memories capable of directing computers or other programmable data processing devices to operate in designated modes, so that instructions stored in such computer-readable memories constitute manufactured products including instruction apparatuses, which implement the functions specified in one or more processes in the flowcharts and/or one or more blocks in the block diagrams.

These computer program instructions may also be loaded into computers or other programmable data processing devices, so that a series of operational steps are performed on the computers or devices to generate computer-implemented processing, so that instructions executed on the computers or devices provide steps for implement the functions specified in one or more processes in the flowcharts and/or one or more blocks in the block diagrams.

In a typical configuration, a computing device includes one or more central processing units (CPUs), input/output interfaces, network interfaces and memory.

The memory may include non-persistent storage medium on computer-readable medium, such as random access memory (RAM), and/or non-volatile memory such as read-only memory (ROM) or flash RAM. The memory serves as an example of computer-readable medium.

The computer-readable medium includes both permanent and non-permanent, removable and non-removable media, and may be implemented by any method or technology for information storage. The information may include computer-readable instructions, data structures, program modules and other data. Examples of computer storage medium include, but are not limited to, phase-change random access memory (PRAM), static random access memory (SRAM), dynamic random access memory (DRAM), other types of random access memory (RAM), read-only memory (ROM), electrically erasable programmable read-only memory (EEPROM), flash memory and other memory technologies, compact disc read-only memory (CD-ROM), digital versatile disc (DVD) and other optical storage medium, magnetic cassettes, magnetic tape, magnetic disk storage and other magnetic storage devices, as well as any other non-transitory medium capable of storing information accessible by computing devices. As defined herein, computer-readable medium excludes transitory computer-readable media such as modulated data signals and carrier waves.

It should be noted that the terms "comprise", "include" and any other variants thereof are intended to cover non-exclusive inclusion. Accordingly, a process, method, product or device comprising a series of elements covers not only those listed elements, but also other unlisted elements or elements inherent to the process, method, product or device. Without further restrictions, an element defined by the phrase "comprising one" does not exclude the presence of additional identical elements in the process, method, product or device containing such element.

Those skilled in the art should understand that the embodiments of the present disclosure may be provided in the form of methods, systems or computer program products. Therefore, the present disclosure may adopt a full hardware embodiment form, a full software embodiment form or an embodiment form combining software and hardware. In addition, the present disclosure may take the form of a computer program product deployed on one or more computer-usable storage mediums containing computer-usable program codes, including but not limited to disk storage devices, CD-ROMs and optical storage devices.

The present disclosure may be described in the general context of computer-executable instructions executed by computers, such as program modules. Generally speaking, program modules include routines, programs, objects, components, data structures and the like that perform designated tasks or implement specific abstract data types. The present disclosure may also be practiced in distributed computing environments, where tasks are executed by remote processing devices connected via communication networks. In distributed computing environments, program modules may be located on local and remote computer storage medium, including storage devices.

Each embodiment in this specification is described in a progressive manner. Identical or similar parts among different embodiments may be mutually referenced, and each embodiment focuses on differences from other embodiments. In particular, system embodiments share substantial similarities with method embodiments, thus being described briefly, with relevant contents referring to corresponding descriptions of method embodiments.

The above descriptions merely relate to the embodiments of the present disclosure, and are not intended to limit the present disclosure. Various modifications and variations may be made to the present disclosure by those skilled in the art. Any modifications, equivalent substitutions and improvements made within the spirit and principle of the present disclosure shall fall within the scope of the claims of the present disclosure.

## Claims

1. A power supply method, comprising:
obtaining a detection output signal based on a detection signal;
generating a reference signal based on the detection output signal; and
generating an output voltage based on the reference signal, when an amplitude of the detection signal is greater than or equal to a boost threshold;
wherein a supply voltage is used to supply power to a power supply.

2. The method according to claim 1, wherein a boost amplitude of the output voltage is synchronized with the amplitude of the detection signal.

3. The method according to claim 1, wherein,
the detection signal is obtained from an amplifier or an input signal of the amplifier;
wherein the amplifier comprises an audio power amplifier or a motor driver.

4. The method according to claim 1, wherein the method further comprises:
setting the output voltage to be the supply voltage of the power supply, when the amplitude of the detection signal is less than the boost threshold.

5. The method according to claim 1, wherein, the generating a reference signal based on the detection output signal, comprises:
obtaining a margin signal; and
superimposing the margin signal and the detection output signal to obtain the reference signal.

6. The method according to claim 5, wherein the margin signal has a fixed amplitude.

7. The method according to any one of claims 1-6, wherein, the generating an output voltage based on the reference signal, comprises: determining the output voltage based on a formula of:
Output Voltage=k×Reference Voltage,
wherein k is a preset amplification coefficient, and the reference voltage is a voltage amplitude of the reference signal.

8. A power supply circuit, comprising:
a detection circuit, comprising a detection signal input terminal and a detection signal output terminal, wherein the detection signal input terminal is configured to receive a detection signal, and the detection signal output terminal is configured to output a detection output signal;
a reference signal generation circuit, comprising a first input terminal and an output terminal, the first input terminal of the reference signal generation circuit being electrically connected to the detection signal output terminal, wherein the reference signal generation circuit is configured to generate a reference signal based on the detection output signal; and
a power supply, comprising a first input terminal, a second input terminal and an output terminal, the first input terminal of the power supply being electrically connected to the output terminal of the reference signal generation circuit, and the second input terminal of the power supply being configured to receive a supply voltage, wherein, when an amplitude of the detection signal is greater than or equal to a boost threshold, the power supply is configured to generate an output voltage based on the reference signal.

9. The circuit according to claim 8, wherein a boost amplitude of the output voltage is synchronized with the amplitude of the detection signal.

10. The circuit according to claim 8, wherein,
the detection signal is obtained from an amplifier or an input signal of the amplifier;
wherein the amplifier comprises an audio power amplifier or a motor driver.

11. The circuit according to claim 8, wherein the power supply is further configured to:
setting the output voltage equal to the supply voltage, when the amplitude of the detection signal is less than the boost threshold.

12. The circuit according to claim 8, wherein the circuit further comprises:
a margin generation circuit, configured to generate a margin signal;
wherein the reference signal generation circuit further comprises a second input terminal, and the second input terminal of the reference signal generation circuit is electrically connected to the margin generation circuit; and
wherein the reference signal generation circuit is configured to superimpose the margin signal and the detection output signal to obtain the reference signal.

13. The circuit according to claim 12, wherein the margin signal has a fixed amplitude.

14. The circuit according to any one of claims 8-13, wherein, the generating an output voltage based on the reference signal, comprises determining the output voltage based on a formula of: $Output Voltage = k \times Reference Voltage ,$ wherein k is a preset amplification coefficient, and the reference voltage is a voltage amplitude of the reference signal.

15. An electronic device, comprising the power supply circuit according to any one of claims 8 to 14 and an amplifier connected to the power supply circuit, wherein the power supply circuit is configured to supply power to the amplifier using the output voltage.

16. The electronic device according to claim 15, wherein the amplifier comprises an audio power amplifier or a motor driver.
